# EUROPEAN PATENT SPECIFICATION

(11) **EP 3 351 466 B1**
(45) Date of publication and mention of the grant of the patent: **18.03.2020**
(21) Application number: 17174423.8
(22) Date of filing: 05.06.2017
(51) Int. Cl.: B62J 7/08, B62J 7/04, B62J 9/00

(54) **BICYCLE RACK ASSEMBLY**
FAHRRADGEPÄCKTRÄGERANORDNUNG
ENSEMBLE PORTE-BAGAGE DE VÉLO

(30) Priority: 18.01.2017 TW 106101741
(43) Date of publication of application: 25.07.2018
(73) Proprietor: Tsai Jung Enterprise Co., Ltd., Changhua County 509 (TW)
(72) Inventor: Chiu, Chih-Wen, 509 Changhua County (TW)
(74) Representative: Cabinet Chaillot

(56) References cited:
- EP-A1- 3 241 727
- CN-A- 103 552 629
- DE-A1-102008 044 797
- DE-U1-202010 000 288
- DE-U1-202011 000 350
- DE-U1-202013 101 143
- DE-U1-202015 105 902
- GB-A- 2 421 758
- TW-A- 201 515 914

## Description

### BACKGROUND OF THE INVENTION

### 1. Fields of the invention

The present invention relates to a bicycle rack assembly, and more particularly, to a securing device for quickly assembling the receiving member to the rack, and quickly dis-assembling the receiving member from the rack.

### 2. Descriptions of Related Art

The conventional way to attach an object to the bicycle rack is to use resilient ropes to wrap the object to the rack. However, the length of the resilient ropes restricts the size of the object to be attached to the rack. Another bicycle rack assembly includes a receiving member which includes rails which allow the receiving member to be slidably connected to the rack. The receiving member can also be removed from the rack by sliding off from the rails. Nevertheless, the users have to align the rails of the receiving member and the rails on the rack. This may be difficult if a heavy object has been put in the receiving member. Similarly, when removing the receiving member from the rack, if the heavy object is in the receiving member, it is difficult to remove the receiving member from the rack.

The present invention intends to provide a securing device of a bicycle rack and which allows the users to quickly and easily assemble the receiving member to the rack, or to quickly and easily dis-assemble the receiving member from the rack.

DE 10 2008 044797 A1 discloses a bicycle rack assembly according to the preamble of claim 1, and in particular an attachment to a luggage carrier of a bicycle with an adapter on the underside of the accessory, wherein the adapter comprises at least one traverse transverse to the luggage carrier, with a latch on the adapter, for locking the adapter to the luggage carrier and with means for positioning the adapter on the luggage carrier. The attachment has consoles comprising longitudinal bars of a carrier and positioning units provided at front and rear cross bars of an adapter arranged in series in a driving direction. A basket is provided at the cross bars of the adapter in a horizontal direction during a delay movement. A positioning pin is provided with a locking bolt, the cross bars and carrier-cross members. Further, the basket is suspended by the cross bars of the carrier into the carrier-cross members in a locking path. And, the basket is provided at a basket base.

EP 3 241 727 A1 discloses a bicycle rack assembly which is relevant for Article 54(3) EPC.

### SUMMARY OF THE INVENTION

The present invention relates according to claim 1 to a bicycle rack assembly and comprises a rack which includes multiple lateral portions that are located adjacent to each other and facing to each other. One of the lateral portions has an engaging recess which includes a narrow area and a wide area. A base has multiple outer portions which are located corresponding to the lateral portions. The base has a connection portion which is engaged with the engaging recess. At least two of the outer portions are in contact with at least two of the lateral portions and friction is formed therebetween so as to attach the base to the rack. A receiving member is removably connected to the base.

The primary object of the present invention is to provide a bicycle rack assembly that is easily assembled and dis-assembled.

The present invention will become more apparent from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the bicycle rack assembly of the present invention;
Fig. 2 is an exploded view of the bicycle rack assembly of the present invention;
Fig. 3 is an exploded view of the base and the positioning assembly of the bicycle rack assembly of the present invention;
Fig. 4 shows another perspective view of the base of the bicycle rack assembly of the present invention;
Fig. 5 is a partial cross sectional view of the bicycle rack assembly of the present invention;
Fig. 6 is a partial cross sectional view of the connection of the rack and the base of the bicycle rack assembly of the present invention;
Fig. 7 is a cross sectional view to show that the connection portion is inserted into the engaging recess;
Fig. 8 is a cross sectional view to show that the tongue is to be inserted into the snap recess, and
Fig. 9 shows that the unlock unit is removed and the rack is locked.

### DETAILED DESCRIPTION OF THE PREFERRED EMBODIMENT

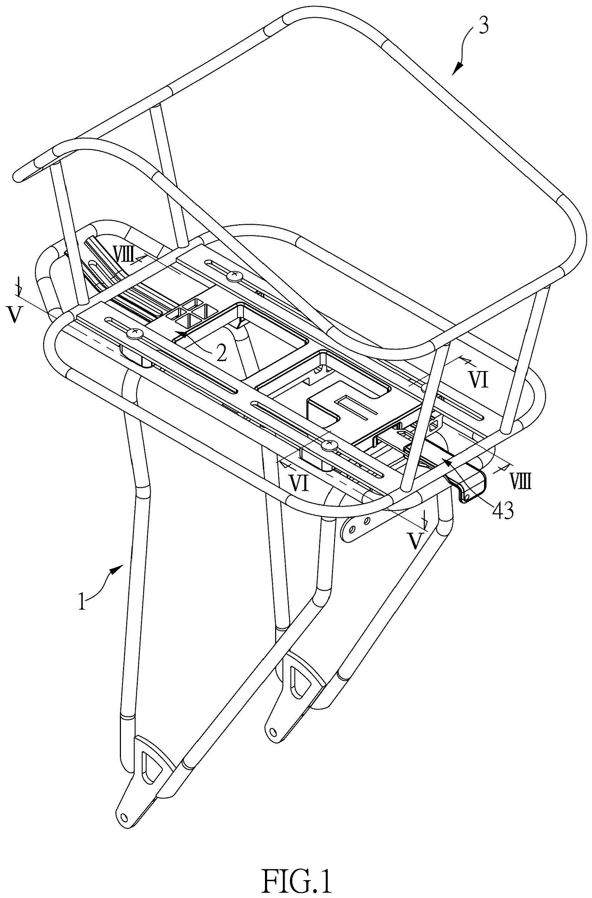

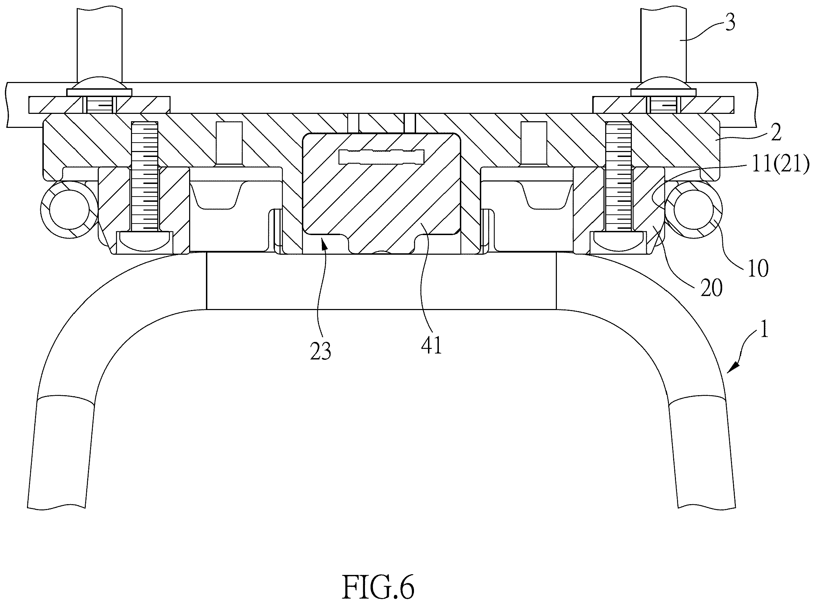

Referring to Figs. 1 to 6, the bicycle rack assembly of the present invention comprises a rack 1, a base 2 and a receiving member 3.

The rack 1 having multiple lateral portions 11 which are located adjacent to each other and facing to each other. One of the lateral portions 11 has an engaging recess 12 defined therein, and the engaging recess 12 includes a narrow area 121 and a wide area 122. The base 2 has multiple outer portions 21 which are located corresponding to the lateral portions 11. The base 2 has a connection portion 22 which is engaged with the engaging recess 12. At least more than two of the outer portions 21 are in contact with at least more than two of the lateral portions 11, and friction is formed therebetween. The receiving member 3 is removably connected to the base 2. The receiving member 3 is fixed to the base 2 by screws. The receiving member 3 can be a basket, a bag or any suitable receiving member.

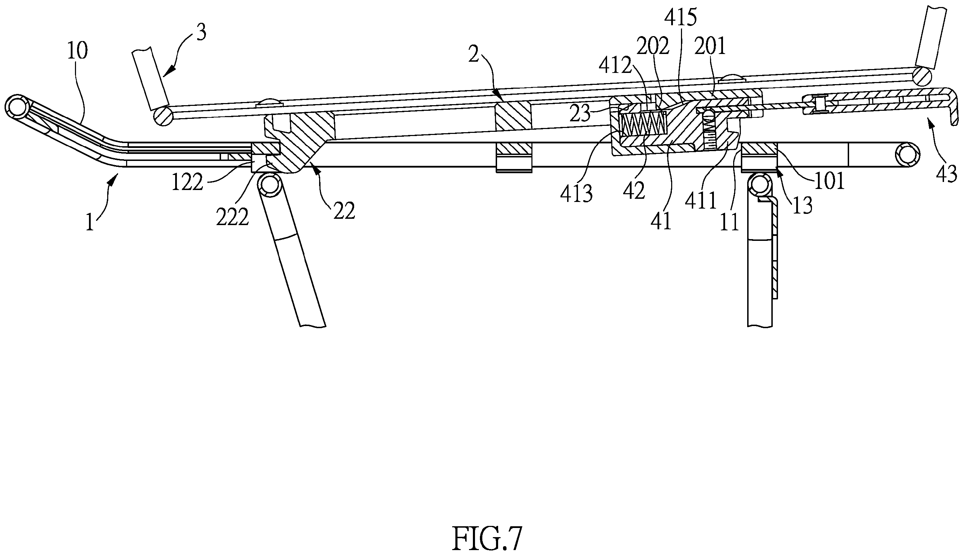

As shown in Fig. 7, the base 2 is force-fitted to the rack 1 by inserting the connection portion 22 into the engaging recess 12 of the rack 1, and the outer portions 21 of the base 2 are force-fitted to the lateral portions 11 to connect the base 2 to the rack 1 by the friction between the lateral portions 11 and the outer portions 21. When removing the base 2 from the rack 1, the above mentioned processes are operated in reverse sequence. The time required for assembling the base 2 to the rack 1, and for dis-assembling the base 2 from the rack 1 is quick and easy.

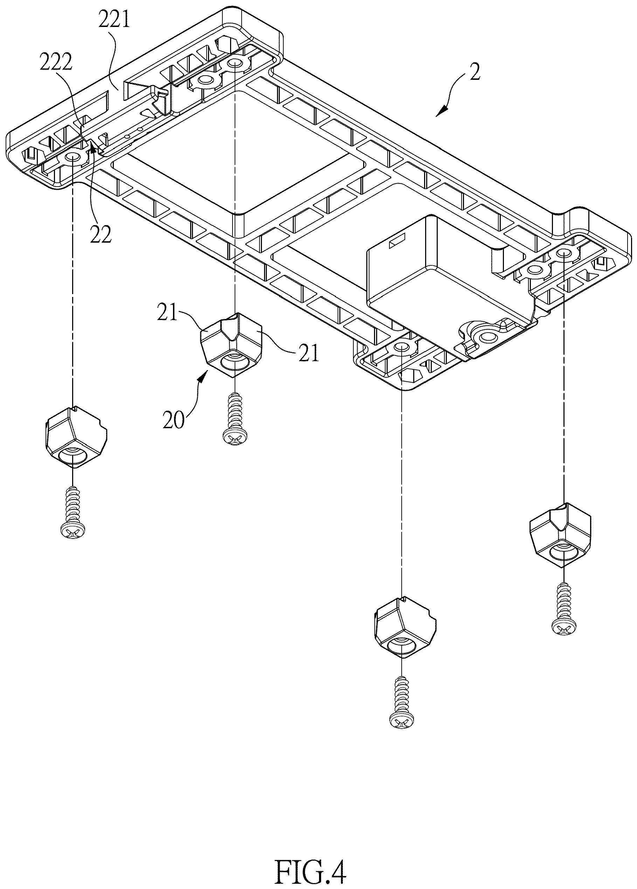

As shown in Fig. 4, multiple blocks 20 are connected to the underside of the base 2 and each block 20 has the outer portions 21 adjacent to each other. The blocks 20 are connected to corners of the base 2 by screws.

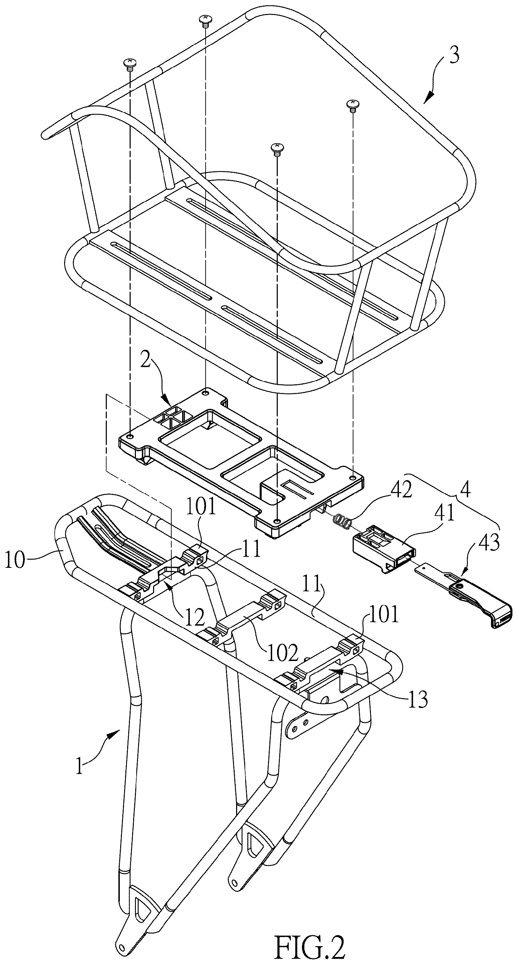

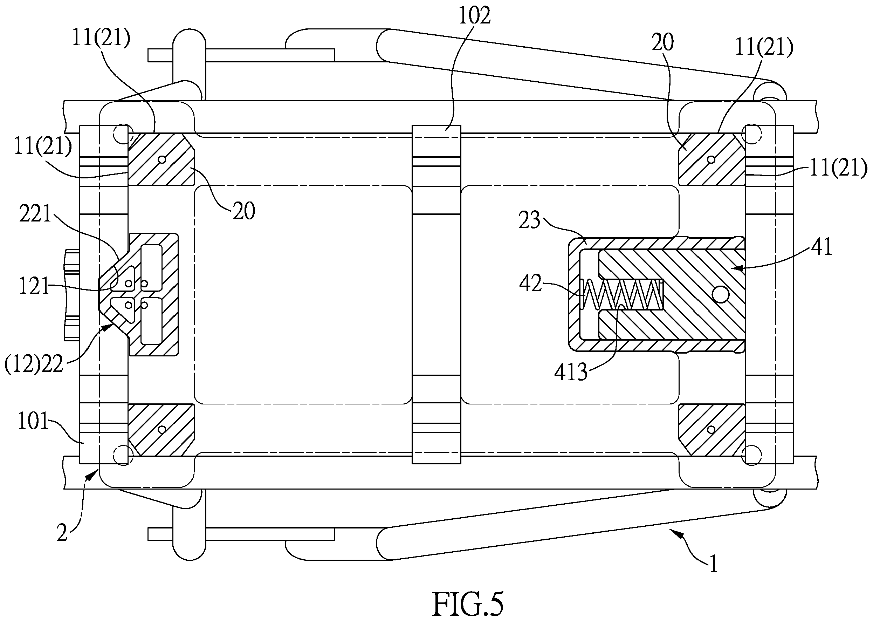

As shown in Fig. 2, the rack 1 includes a frame 10 and two bars 101 transversely connected between two sides of the frame 10. A portion of the lateral portions 11 is formed on the frame 10, and another portion of the lateral portions 11 is formed on the two bars 101. The engaging recess 12 is defined in one of the two bars 101. The narrow area 121 of the engaging recess 12 includes an opening, and the wide area 122 of the engaging recess 12 includes another opening which is wider than the opening of the narrow area 121. The connection portion 22 is an inverted T-shaped member and includes a first part 221 and a second part 222 as shown in Figs. 4 and 5. The first part 221 is a tapered part. The connection portion 22 is engaged with the engaging recess 12. The second part 222 is engaged with the wide area 122. The first part 221 is engaged with the narrow area 121. The first part 221 and the second part 222 can only move toward the openings of the narrow area 121 and the wide area 122. The wide area 122 restricts the movement in the upward, downs and transverse direction of the narrow area 222. A middle bar 102 is located between the two bars 101. The middle bar 102 and the two bars 101 each have a top which is in contact with the underside of the base 2.

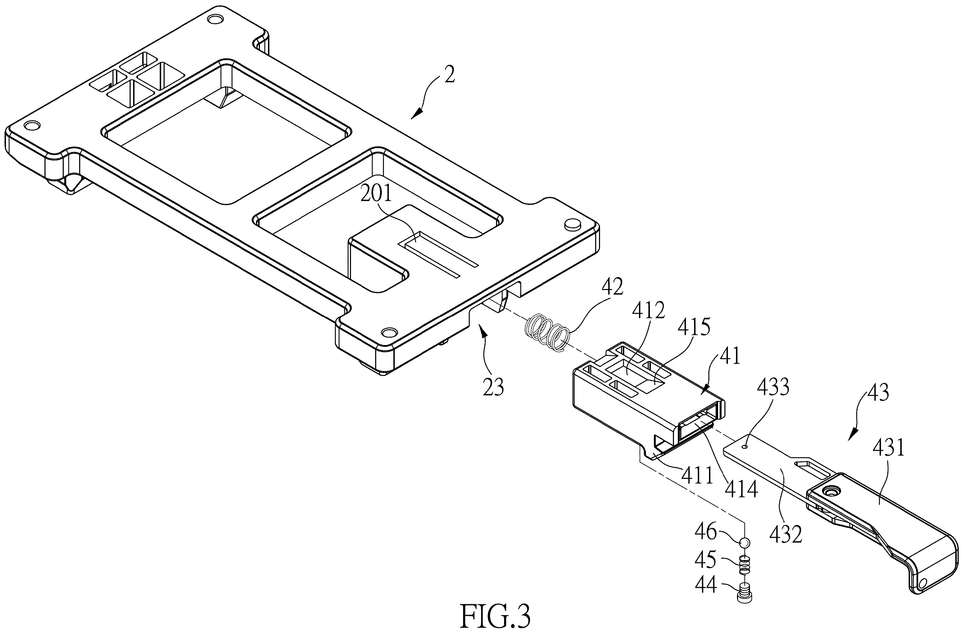

The base 2 includes a side recess 23 which is located opposite to the connection portion 22. A positioning assembly 4 is removably inserted into the side recess 23 as shown in Figs. 3, 7 and 8, and includes a movable member 41 and a spring 42. The movable member 41 is removably located in the side recess 23. The spring 42 is biased between the inside of the side recess 23 and the movable member 41. The movable member 41 includes a tongue 411 which is engaged with a snap recess 13 of one of the bars 101. When the movable member 41 moves into the side recess 23, the spring 42 is compressed and the tongue 411 is disengaged from the bar 101 having the side recess 23.

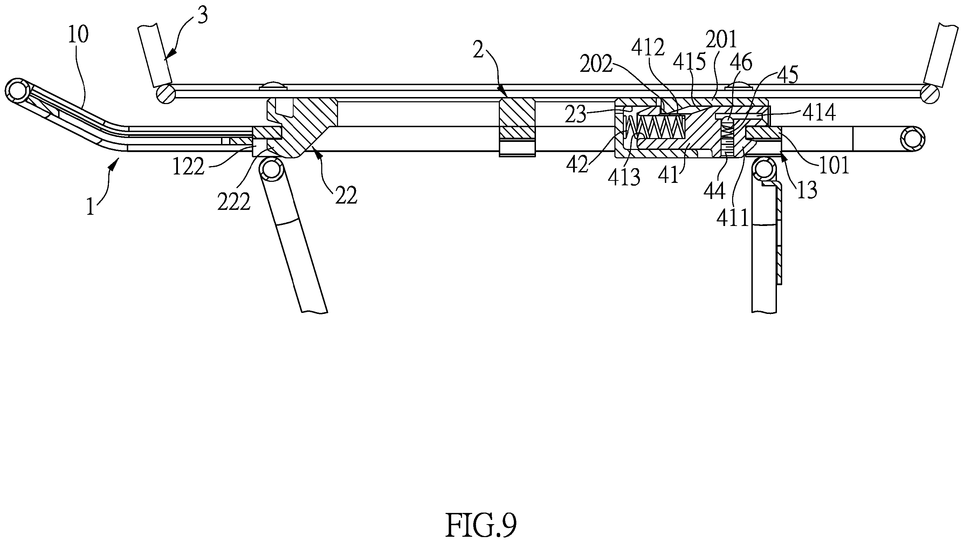

The base 2 includes a resilient rib 201 extending toward the side recess 23. The movable member 41 includes an axial slot 412 in which the resilient rib 201 is inserted. The distance that the movable member 41 moves is restricted by movement of the resilient rib 201 in the axial slot 412 as shown in Figs. 7 to 9.

The movable member 41 includes an end recess 413 defined in the first end thereof that faces the side recess 23. The spring 42 has one end received in the end recess 413 and contacting the inner end of the end recess 413. The second end of the movable member 41 has an insertion recess414. The positioning assembly 4 has an unlock unit 43 which includes an operation end 431 and an unlock end 432. The unlock end 432 is movably inserted into the insertion recess 414 so that the operation end 431 is pushed to move the movable member 41 toward the side recess 23. The axial slot 412 includes an inclined face 415 which is narrowed and inclined from the insertion recess 414 toward the end recess 413. The resilient rib 201 has a guide member 202 which is moved to the inner end of the axial slot 412 via the inclined face 415.

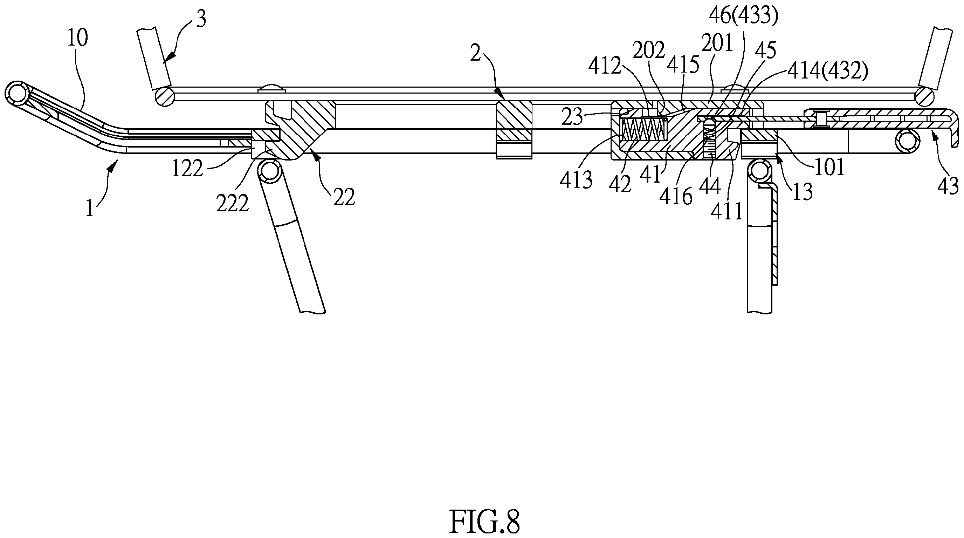

The movable member 41 includes a receiving recess 416 defined in the underside thereof. The receiving recess 416 communicates with the insertion recess 414. A screw 44, a resilient member 45 and a ball 46 are received in the receiving recess 416. The resilient member 45 is biased between the screw 44 and the ball 46. The ball 46 partially protrudes from the insertion recess 414 and is positioned in a positioning hole 433 of the unlock end 432 of the unlock unit 43. The positioning hole 433 of the unlock unit 43 is positioned by the ball 46. The unlock unit 43 can also be used as a key to unlock the positioning assembly 4. When the unlock unit 43 is inserted into the insertion recess 414 and pushes the movable member 41, the tongue 411 of the movable member 41 is separated from the snap recess 13 as shown in Fig. 8, such that the rack 1 can be quickly separated from the base 2 and the receiving member 3.

While we have shown and described the embodiment in accordance with the present invention, it should be clear to those skilled in the art that further embodiments may be made without departing from the scope of the present invention which is defined by the appended claims.

## Claims

1. A bicycle rack assembly comprising:
a rack (1) having multiple lateral portions (11) which are located adjacent to each other and facing to each other, one of the lateral portions (11) having an engaging recess (12) defined therein;
a base (2) having multiple outer portions (21) which are located corresponding to the lateral portions (11), at least more than two of the outer portions (21) being in contact with at least more than two of the lateral portions (11) and friction being formed therebetween, the base (2) having a connection portion (22) which is engaged with the engaging recess (12);
a receiving member (3) removably connected to the base (2), and
the rack (1) including a frame (10) and two bars (101) transversely connected between two sides of the frame (10), a portion of the lateral portions (11) being formed on the frame (10), and another portion of the lateral portions (11) being formed on the two bars (101), the engaging recess (12) being defined in one of the two bars (101), **characterized by**
the base (2) including a side recess (23) which is located opposite to the connection portion (22), a positioning assembly (4) being removably inserted into the side recess (23) and including a movable member (41) and a spring (42), the movable member (41) being movable in the side recess (23), the spring (42) being biased between an inside of the side recess (23) and the movable member (41), the movable member (41) including a tongue (411) which is engaged with a snap recess (13) of one of the bars (101), wherein, when the movable member (41) moves in the side recess (23), the spring (42) is compressed and the tongue (411) is disengaged from the bar having the snap recess (13),
wherein the base (2) includes multiple blocks (20) connected to corners of the base (2) and each block has the outer portions (21) adjacent to each other,
wherein the engaging recess (12) has a narrow area (121) and a wide area (122), the narrow area (121) of the engaging recess (12) includes an opening, the wide area (122) of the engaging recess (12) includes another opening which is wider than the opening of the narrow area (121), the connection portion (22) is an inverted T-shaped member and includes a first part (221) and a second part (222), the first part (221) is a tapered part, the connection portion (22) is engaged with the engaging recess (12), the second part (222) is engaged with the wide area (122), the first part (221) is engaged with the narrow area (121).

2. The bicycle rack assembly as claimed in claim 1, wherein the base (2) includes a resilient rib (201) extending toward the side recess (23), the movable member (41) includes an axial slot (412) in which the resilient rib (201) is inserted, a distance that the movable member (41) moves is restricted by movement of the resilient rib (201) in the axial slot (412).

3. The bicycle rack assembly as claimed in claim 2, wherein the movable member (41) includes an end recess (413) defined in a first end thereof that faces the side recess (23), the spring (42) has one end received in the end recess (413) and contacting an inner end of the end recess (413), a second end of the movable member (41) has an insertion recess (414), the positioning assembly (4) has an unlock unit (43) which includes an operation end (431) and an unlock end (432), the unlock end (432) is movably inserted into the insertion recess (414) so that the operation end (431) is pushed to move the movable member (41) toward the side recess (23).

4. The bicycle rack assembly as claimed in claim 3, wherein the axial slot (412) includes an inclined face (415) which is narrowed and inclined from the insertion recess (414) toward the end recess (413), the resilient rib (201) has a guide member (202) which is moved to an inner end of the axial slot (412) via the inclined face (415).

5. The bicycle rack assembly as claimed in claim 4, wherein the movable member (41) includes a receiving recess (416) defined in an underside thereof, the receiving recess (416) communicates with the insertion recess (414), a screw (44), a resilient member (45) and a ball (46) are received in the receiving recess (416), the resilient member (45) is biased between the screw (44) and the ball (46), the ball (46) partially protrudes from the insertion recess (414) and is positioned in a positioning hole (433) of the unlock end (432) of the unlock unit (43).

6. The bicycle rack assembly as claimed in claim 5, wherein a middle bar (102) is located between the two bars (101), the middle bar (102) and the two bars (101) each have a top which is in contact with the underside of the base (2).

## Patentansprüche

1. Fahrradgepäckträger-Anordnung, Folgendes umfassend:
einen Gepäckträger (1) mit mehreren seitlichen Abschnitten (11), die nebeneinander angeordnet und einander zugewandt sind, wobei in einem der seitlichen Abschnitte eine Eingriffsvertiefung (12) definiert ist,
eine Basis (2), die mehrere äußere Abschnitte (21) aufweist, die den seitlichen Abschnitten (11) entsprechend angeordnet sind, wobei mindestens mehr als zwei der äußeren Abschnitte (21) in Kontakt mit mindestens mehr als zwei der seitlichen Abschnitte (11) stehen und dazwischen eine Reibung gebildet ist, wobei die Basis (2) einen Verbindungsabschnitt (22) aufweist, der mit der Eingriffsvertiefung (12) in Eingriff steht,
ein Aufnahmeelement (3), das abnehmbar mit der Basis (2) verbunden ist, und
der Gepäckträger (1) einen Rahmen (10) und zwei Streben (101) beinhaltet, die quer zwischen zwei Seiten des Rahmens (10) eingebunden sind, wobei ein Abschnitt der seitlichen Abschnitte (11) an dem Rahmen (10) gebildet ist und ein anderer Abschnitt der seitlichen Abschnitte (11) an den zwei Streben (101) gebildet ist, wobei die Eingriffsvertiefung (12) in einer der zwei Streben (101) definiert ist,
**dadurch gekennzeichnet, dass** die Basis (2) eine Seitenvertiefung (23) beinhaltet, die gegenüber dem Verbindungsabschnitt (22) angeordnet ist, wobei in die Seitenvertiefung (23) eine Positionierungsanordnung (4) abnehmbar eingesetzt ist und ein bewegliches Element (41) sowie eine Feder (42) beinhaltet, wobei das bewegliche Element (41) in der Seitenvertiefung (23) beweglich ist, wobei die Feder (42) zwischen einer Innenseite der Seitenvertiefung (23) und dem beweglichen Element (41) vorgespannt ist, wobei das bewegliche Element (41) eine Zunge (411) beinhaltet, die mit einer Rastvertiefung (13) einer der Streben (101) in Eingriff steht, wobei die Feder (42) zusammengedrückt und die Zunge (411) aus der Strebe gelöst wird, welche die Rastvertiefung (13) aufweist, wenn sich das bewegliche Element (41) in der Seitenvertiefung (23) bewegt,
wobei die Basis (2) mehrere Blöcke (20) beinhaltet, die mit den Ecken der Basis (2) verbunden sind und die äußeren Abschnitte (21) aller Blöcke nebeneinander liegen,
wobei die Eingriffsvertiefung (12) einen schmalen Bereich (121) und einen breiten Bereich (122) aufweist, wobei der schmale Bereich (121) der Eingriffsvertiefung (12) eine Öffnung beinhaltet, der breite Bereich (122) der Eingriffsvertiefung (12) eine andere Öffnung beinhaltet, die breiter als die Öffnung des schmalen Bereichs (121) ist, der Verbindungsabschnitt (22) ein umgekehrt T-förmiges Element ist und einen ersten Teil (221) und einen zweiten Teil (222) beinhaltet, wobei der erste Teil (221) ein sich verjüngender Teil ist, der Verbindungsabschnitt (22) in Eingriff mit der Eingriffsvertiefung (12) steht, der zweite Teil (222) in Eingriff mit dem breiten Bereich (122) steht, der erste Teil (221) in Eingriff mit dem engen Bereich (121) steht.

2. Fahrradgepäckträger-Anordnung nach Anspruch 1, wobei die Basis (2) eine elastische Rippe (201) beinhaltet, die sich hin zur Seitenvertiefung (23) erstreckt, wobei das bewegliche Element (41) einen axialen Schlitz (412) beinhaltet, in den die elastische Rippe (201) eingesetzt ist, wobei eine Strecke, die sich das bewegliche Element (41) bewegt, durch die Bewegung der elastischen Rippe (201) in dem axialen Schlitz (412) begrenzt ist.

3. Fahrradgepäckträger-Anordnung nach Anspruch 2, wobei das bewegliche Element (41) eine Endvertiefung (413) beinhaltet, die in einem ersten seiner Enden, das der Seitenvertiefung (23) zugewandt ist, definiert ist, wobei die Feder (42) ein Ende aufweist, das in der Endvertiefung (413) aufgenommen ist und mit einem inneren Ende der Endvertiefung (413) in Kontakt steht, wobei ein zweites Ende des beweglichen Elements (41) eine Einsetzvertiefung (414) aufweist, wobei die Positionierungsanordnung (4) eine Entsperrungseinheit (43) aufweist, die ein Betriebsende (431) und ein Entsperrungsende (432) beinhaltet, wobei das Entsperrungsende (432) beweglich in die Einsetzvertiefung (414) eingesetzt ist, so dass das Betriebsende (431) gedrückt wird, um das bewegliche Element (41) hin zur Seitenvertiefung (23) zu bewegen.

4. Fahrradgepäckträger-Anordnung nach Anspruch 3, wobei der axiale Schlitz (412) eine geneigte Fläche (415) beinhaltet, die sich von der Einsetzvertiefung (414) hin zur Endvertiefung (413) verjüngt und geneigt ist, wobei die elastische Rippe (201) ein Führungselement (202) aufweist, das über die geneigte Fläche (415) zu einem inneren Ende des axialen Schlitzes (412) bewegt wird.

5. Fahrradgepäckträger-Anordnung nach Anspruch 4, wobei das bewegliche Element (41) eine Aufnahmevertiefung (416) beinhaltet, die in seiner Unterseite definiert ist, wobei die Aufnahmevertiefung (416) mit der Einsetzvertiefung (414) in Verbindung steht, wobei in der Aufnahmevertiefung (416) eine Schraube (44), ein elastisches Element (45) und eine Kugel (46) aufgenommen sind, wobei das elastische Element (45) zwischen der Schraube (44) und der Kugel (46) vorgespannt ist, wobei die Kugel (46) teilweise aus der Einsetzvertiefung (414) herausragt und in einer Positionierungsöffnung (433) des Entsperrungsendes (432) der Entsperrungseinheit (43) positioniert ist.

6. Fahrradgepäckträger-Anordnung nach Anspruch 5, wobei zwischen den zwei Streben (101) eine Mittelstrebe (102) angeordnet ist, wobei die Mittelstrebe (102) und die zwei Streben (101) jeweils eine Oberseite aufweisen, die in Kontakt mit der Unterseite der Basis (2) steht.

## Revendications

1. Ensemble porte-bagage de bicyclette comprenant :
un porte-bagage (1) ayant de multiples parties latérales (11) qui sont situées de manière adjacente les unes aux autres et se font mutuellement face, l'une des parties latérales (11) ayant un évidement d'engagement (12) défini à l'intérieur de celle-ci ;
une base (2) ayant de multiples parties externes (21) qui sont situées en correspondance des parties latérales (11), au moins plus de deux des parties externes (21) étant en contact avec au moins plus de deux des parties latérales (11) et un frottement étant créé entre elles, la base (2) ayant une partie de liaison (22) qui est engagé avec l'évidement d'engagement (12) ;
un élément de réception (3) relié de manière amovible à la base (2), et
le porte-bagage (1) comprenant un cadre (10) et deux barres (101) reliées transversalement entre deux côtés du cadre (10), une section des parties latérales (11) étant formée sur le cadre (10), et une autre section des parties latérales (11) étant formée sur les deux barres (101), l'évidement d'engagement (12) étant défini dans l'une des deux barres (101),
**caractérisé par** la base (2) comprenant un évidement latéral (23) qui est situé à l'opposé de la partie de liaison (22), un ensemble de positionnement (4) étant introduit de manière amovible dans l'évidement latéral (23) et comprenant un élément mobile (41) et un ressort (42), l'élément mobile (41) étant mobile dans l'évidement latéral (23), le ressort (42) étant sollicité entre un intérieur de l'évidement latéral (23) et l'élément mobile (41), l'élément mobile (41) comprenant une languette (411) qui est engagée avec un évidement d'encliquetage (13) de l'une des barres (101), lorsque l'élément mobile (41) se déplace dans l'évidement latéral (23) le ressort (42) étant comprimé et la languette (411) étant désengagée de la barre ayant l'évidement d'encliquetage (13),
la base (2) comprenant de multiples blocs (20) reliés à des coins de la base (2), et chaque bloc ayant les parties externes (21) adjacentes les unes aux autres,
l'évidement d'engagement (12) ayant une zone étroite (121) et une zone large (122), la zone étroite (121) de l'évidement d'engagement (12) comprenant une ouverture, la zone large (122) de l'évidement d'engagement (12) comprenant une autre ouverture qui est plus large que l'ouverture de la zone étroite (121), la partie de liaison (22) étant un élément en forme de T inversé et comprenant une première partie (221) et une seconde partie (222), la première partie (221) étant une partie effilée, la partie de liaison (22) étant engagée avec l'évidement d'engagement (12), la seconde partie (222) étant engagée avec la zone large (122), la première partie (221) étant engagée avec la zone étroite (121).

2. Ensemble porte-bagage de vélo selon la revendication 1, dans lequel la base (2) comprend une nervure élastique (201) s'étendant vers l'évidement latéral (23), l'élément mobile (41) comprend une fente axiale (412) dans laquelle la nervure élastique (201) est introduite, une distance sur laquelle se déplace l'élément mobile (41) est limitée par un mouvement de la nervure élastique (201) dans la fente axiale (412).

3. Ensemble porte-bagage de bicyclette selon la revendication 2, dans lequel l'élément mobile (41) comprend un évidement d'extrémité (413) défini dans une première extrémité de celui-ci qui fait face à l'évidement latéral (23), le ressort (42) a une extrémité reçue dans l'évidement d'extrémité (413) et en contact avec une extrémité interne de l'évidement d'extrémité (413), une seconde extrémité de l'élément mobile (41) a un évidement d'introduction (414), l'ensemble de positionnement (4) a une unité de déverrouillage (43) qui comprend une extrémité d'actionnement (431) et une extrémité de déverrouillage (432), l'extrémité de déverrouillage (432) est introduite de manière mobile dans l'évidement d'introduction (414) de telle sorte que l'extrémité d'actionnement (431) est poussée pour déplacer l'élément mobile (41) vers l'évidement latéral (23).

4. Ensemble porte-bagage de bicyclette selon la revendication 3, dans lequel la fente axiale (412) comprend une face inclinée (415) qui est rétrécie et inclinée à partir de l'évidement d'introduction (414) vers l'évidement d'extrémité (413), la nervure élastique (201) a un élément de guidage (202) qui est déplacé jusqu'à une extrémité interne de la fente axiale (412) par l'intermédiaire de la face inclinée (415).

5. Ensemble porte-bagage de bicyclette selon la revendication 4, dans lequel l'élément mobile (41) comprend un évidement de réception (416) défini dans un côté inférieur de celui-ci, l'évidement de réception (416) communique avec l'évidement d'introduction (414), une vis (44), un élément élastique (45) et une bille (46) sont reçus dans l'évidement de réception (416), l'élément élastique (45) est sollicité entre la vis (44) et la bille (46), la bille (46) fait partiellement saillie à partir de l'évidement d'introduction (414) et est positionnée dans un trou de positionnement (433) de l'extrémité de déverrouillage (432) de l'unité de déverrouillage (43).

6. Ensemble porte-bagage de bicyclette selon la revendication 5, dans lequel une barre centrale (102) est située entre les deux barres (101), la barre centrale (102) et les deux barres (101) ont chacune une partie supérieure qui est en contact avec le côté inférieur de la base (2).
